# EUROPEAN PATENT SPECIFICATION

(11) **EP 1 875 224 B1**
(45) Date of publication and mention of the grant of the patent: **29.04.2009**
(21) Application number: 06742517.3
(22) Date of filing: 15.03.2006
(51) Int. Cl.: G01N 30/60, G01N 30/52, B01J 20/281, B01D 15/22, B81B 7/04

(54) **METHOD FOR PREPARING MONOLITHIC SEPARATION AND REACTION MEDIA IN A SEPARATION OR REACTION CHANNEL**
VERFAHREN ZUR HERSTELLUNG MONOLITHISCHER TRENN- UND REAKTIONSMEDIEN IN EINEM TRENN- ODER REAKTIONSKANAL
PROCEDE DE PREPARATION DE MILIEUX MONOLITHIQUES DE SEPARATION ET DE REACTION DANS UN CANAL DE SEPARATION OU DE REACTION

(30) Priority: 17.03.2005 EP 05002883
(43) Date of publication of application: 09.01.2008
(73) Proprietor: VRIJE UNIVERSITEIT BRUSSEL, 1050 Brussel (BE)
(72) Inventor: DESMET, Gert, B-1982 Elewijt (BE)
(74) Representative: Brants, Johan P.E.
(86) International application number: PCT/EP2006/002401
(87) International publication number: WO 2006/097301

(56) References cited:
- WO-A-20/04046020
- US-A- 5 135 627
- US-B1- 6 596 144
- CHIRICA G S ET AL: "Novel monolithic columns with templated porosity" JOURNAL OF CHROMATOGRAPHY A, ELSEVIER, AMSTERDAM, NL, vol. 924, no. 1-2, 27 July 2001 (2001-07-27), pages 223-232, XP004273945 ISSN: 0021-9673
- GZIL P ET AL: "Computational fluid dynamics simulations yielding guidelines for the ideal internal structure of monolithic liquid chromatography columns" JOURNAL OF CHROMATOGRAPHY A, ELSEVIER, AMSTERDAM, NL, vol. 991, no. 2, 4 April 2003 (2003-04-04), pages 169-188, XP004415984 ISSN: 0021-9673
- STACHOWIAK T B ET AL: "Chip electrochromatography" JOURNAL OF CHROMATOGRAPHY, ELSEVIER SCIENCE PUBLISHERS B.V. AMSTERDAM, NL, vol. 1044, no. 1-2, 30 July 2004 (2004-07-30), pages 97-111, XP004522964 ISSN: 0021-9673

## Description

### Field of the invention

The present invention relates to a method for preparing monolithic separation and reaction media and their use in monolithic columns.

### Background of the invention

Monolithic columns are a powerful new HPLC column format, owing their improved performance to the fact that the pore size and the skeleton size can be controlled independently of each other, hence offering a better compromise between flow resistance and band broadening than packed bed columns. In the art, two main classes of monolithic columns exist: silica monolithic columns, as disclosed in WO 95/03256 and polymer monolithic columns, described by e.g. Hjerten et al. (Nature 356, pp. 810-811, 1992) and Frechet et al (Anal Chem 64, pp. 820-822, 1993). The silica monoliths currently are the preferred monolithic column format of choice, due to their bi-porous structure i.e. macropores offering a minimal flow resistance to the mobile phase flow and micro-pores inside the skeleton providing a maximal adsorption capacity.

Recent studies have revealed that the chromatographic performances of even the best known monolithic columns could be much improved if their structural homogeneity could be improved (Vervoort et al., Journal of Chromatography A 1030, 177-186, 2004). US 6,596,144 and Slentz et al. Electrophoresis, vol 22. 2, 2001, 3736-3743, describe separation columns based on collocated monolithic support structures.

In the literature of lab-on-a-chip devices, many micro-channel systems are described which are filled with monolithic media. None of them however describes a micro-machined array of pillars to induce a spatial order in the formed monolithic skeleton.

### Summary of the invention

The present invention concerns a method for preparing a monolithic separation or reaction column as defined in claim 1. Preferred embodiments are defined in claims 2-5.

In the present invention a three-dimensional monolithic skeleton is providing a desirable separative or reactive effect. Said method comprises arranging a micro-structured scaffold into a separation channel or column prior to the application of monolith forming solutions and methods. The homogeneity of the monolithic skeleton is strongly improved by the use of the micro-structured scaffold. Using the regularly spaced lattice structure of the microstructures scaffold, the spatial constraints imposed upon the demixing processes occurring during the monolith forming process imposes an overall regularity on the formed monolithic skeleton.

The method according to the invention provides a separation or reaction channel with at least one clearly defined inlet and at least one clearly defined outlet, wherein said separation or reaction channel comprises a micro-structured scaffold comprising scaffold skeleton elements, wherein said scaffold is embedded in a monolithic stationary phase.

A monolithic column directly obtained by the method of the invention comprises a reaction or separation channel.

The channels and columns obtained by the method according to the invention can be used in liquid phase chromatography.

### Brief description of the Figures

**Figure 1** represents schematic bird's eye views of array of structural homogeneity-inducing micro-pillars (a) before and (b) after application of the monolithic skeleton forming method according to an embodiment of the present invention.
**Figure 2** represents schematic top views of equilateral grid staggering (a) and cubic grid staggering (b) according to embodiments of the present invention.

### Detailed description

The present invention concerns a method to produce a three-dimensional monolithic skeleton providing a desirable separative or reactive effect wherein the homogeneity of said monolithic skeleton is strongly improved by arranging a micro-structured scaffold into the separation channel or column prior to the application of the monolith forming solutions and methods.

In particular the present invention provides a method for preparing monolithic separation and reaction media in a separation or reaction channel, characterised in that the separation or reaction channel is first provided with a micro-structured scaffold comprising scaffold skeleton elements, said micro-structured scaffold substantially filling the whole channel interior in a substantially uniform way prior to the application of the monolith forming solutions and methods. This method is suitable to any monolith forming methods known in the art. Non-limiting example of suitable monolith forming solutions and methods for use in combination with the present invention are hydrolytically initiated polycondensation reactions of tetraalkoxysilane, in the presence of poly-ethylene glycol as the porogenic solvent, yielding silica monoliths. Another example is the use of free-radical initiated co-polymerization reactions involving methacrylate esters in combination with a porogenic solvent yielding polymeric monoliths.

As used herein "substantially uniform way" refers to the fact that the micro-structure scaffold provides a regularly spaced lattice structure within the channel.

As used in the specification and the appended claims, the singular forms "a", "an," and "the" include plural referents unless the context clearly dictates otherwise. By way of example, "a method" means one method or more than one method.

The recitation of numerical ranges by endpoints includes all numbers and fractions subsumed within that range (e.g. 1 to 5 includes 1, 1.5, 2, 2.75, 3, 3.80, 4, and 5).

The present invention is particularly suited for the development of the two types of monolithic columns currently used in the art of chromatography and lab-on-a-chip reactions: the organic polymer-based monolith and the silica-based monolith. Other types of macro-porous monolithic materials, such as polymerised High Internal Phase Emulsions (polyHIPE), or aerogels and xerogels would however also greatly benefit from the presence of such a regular, order inducing scaffold structure. Monolithic aerogel structures can for example be obtained by first synthesising a wet gel (the so-called alcogel) using sol-gel chemistry, in which a liquid silicate precursor is hydrolysed and condensed into a polysilicate gel. The remaining liquid phase, enclosed in the formed gel network, is then (normally) evacuated by supercritical drying, resulting in the formation of a dry aerogel of pure silica.

To promote any of the steps involved in the monolith forming process and/or to improve the fixation of the monolith to the scaffold, the skeleton of the scaffold can be pre-coated with any desirable chemical substance or materials layer prior to the application of the monolith forming mixtures.

The micro-structured scaffolds for use in the present invention can be obtained using any method capable of providing a sufficient degree of micro-structuring. Such as for example 2-D or 3-D laser ablation, photolithographic etching, and the like. In a preferred embodiment, the solid scaffold elements (=scaffold skeleton) are three-dimensional and their skeleton is sufficiently thin, i.e., its mean thickness is smaller than 20 µm, preferably smaller than 5 µm and even more preferably smaller than 1 µm, to loose a minimum of effective space inside the column (i.e. to minimise the loss of effective space). To provide order on the smallest possible scale, the mean distance between said scaffold skeleton elements is smaller than 100 µm, preferably smaller than 10 µm, and in some cases preferably smaller than 1 µm. Suitable - skeleton materials can be any mechanically resistant materials amenable for micro-structuring, non-limiting examples thereof include silicon, metals, inorganics and polymers.

Not many methods in the art of micro-structuring are currently known that can produce large scale 3-D structures with the required skeleton sizes that could fill the entire volume of a capillary or tubular column. Such methods could furthermore be very time consuming and expensive. A preferred embodiment consists of scaffold skeleton elements consisting of a 2-dimensional array of pillars.

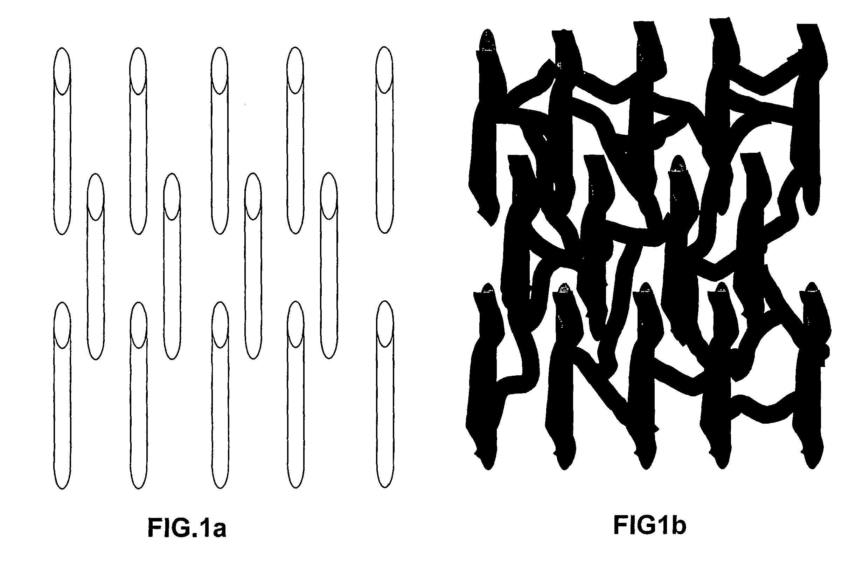

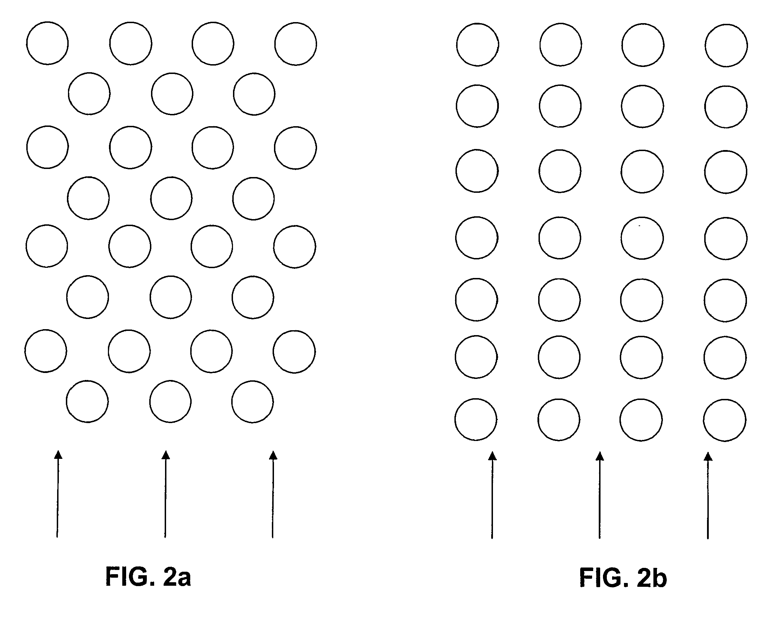

The micro-structured scaffolds or elements, for e.g. the pillars, can be produced using etching Deep Reactive Ion Etching (DRIE) methods. By applying the so-called Bosch process for example, i.e., the etching of silicon followed by a sidewall passivation step, high aspect ratio structures can be obtained. Fine tuning of both the passivation and the etch step in terms of timing, etch gas composition and RF-power, allows to make pillars for use in the present invention with large (i.e, larger than 10) height over width aspect-ratio's. To induce a maximal structural homogeneity, the pillars can be arranged on the corner points of a tiled grid of equilateral triangles, although the method according to the present invention can also be used with any other suitable pillar arrangement. In a preferred embodiment, the pillars are arranged such that the flow paths which would be followed by a fluid which flowing through the empty pillar array would automatically merge with the adjacent flow paths after each row of pillars. Non-limiting examples of suitable arrangements are shown in Fig. 2a and 2b, wherein Fig. 2a represents an equilateral grid staggering arrangement and Fig. 2a represents a cubic grid staggering arrangement, with the arrows representing the flow direction when in use. In a preferred embodiment, the arrangement in Fig. 2a is used. The regular merging of flow paths promotes the lateral mixing. In the art of chromatography, it is a highly beneficial feature because it reduces the band broadening. Fig. 1 represents an embodiment of the present invention, wherein is shown an array of structural homogeneity-inducing micro-pillars (Fig. 1a) before and (Fig. 1b) after application of the monolithic skeleton forming method.

Apart from being circular, it is also feasible that other axial cross-sectional shapes for the micro-pillars can be used, including ellipsoidal, hemi-circular, diamond-like, triangular, square, rectangular and hexagonal shapes, and also including all conceivable axially elongated shapes with a length over mean width ratio up to 500:1, and possibly even more. The axially elongated shapes preferably do not run uninterrupted along the entire channel length, thereby allowing the possibility for lateral mixing.

In an embodiment of the present invention, the micro-structured scaffold is obtained by first providing an array of regularly spaced micro-pillars on a first surface, followed by a bonding step with a second surface so that said second surface and said first surface form a flow channel wherein said micro-pillars substantially extend from said first surface to said second surface. In an embodiment, said second surface also contains an array of micro-pillars and wherein the combination of said micro-pillars with the micro-pillars on said first surface substantially fill the entire channel depth.

The method according to the present invention provides separation or reaction channels provided with a micro-structured scaffold comprising scaffold skeleton elements, wherein said scaffold is embedded in a monolithic stationary phase.

The present invention also encompasses the use of a micro-structured scaffold for the preparation of a monolithic column. The micro-structured scaffold may be formed in a column of any size or shape including conventional liquid chromatographic or reaction columns that may be circular cylinders, or coiled, bent or straight capillary tubes, or microchips or having any dimension or geometry.

A monolithic column comprising a separation or reaction channel is obtained by the method according to the present invention. The monolithic column includes a casing (channel) having internal walls provided with a micro-structured scaffold comprising scaffold skeleton elements, wherein said scaffold is embedded in a monolithic stationary phase. In particular, the method according to the present invention provides a monolithic column comprising a reaction or separation channel, wherein said separation or reaction channel comprises a micro-structured scaffold comprising scaffold skeleton elements, characterized in that said scaffold is embedded in a monolithic stationary phase. Said scaffold skeleton elements comprise an array of regularly spaced micro-pillars. The method according to the present invention encompasses organic polymer-based monolithic columns, silica-based monolithic columns as well as macro-porous monolithic columns.

In a preferred embodiment, the mean thickness of the scaffold skeleton elements is smaller than 20 µm, preferably smaller than 5 µm and more preferably smaller than 1 µm, and wherein the mean distance between said scaffold skeleton elements is smaller than 100 µm, preferably smaller than 10 µm, and is some cases preferably smaller than 1 µm. The axial cross-section of said micro-pillars can be circular, ellipsoidal, hemi-circular, diamond-like, triangular, square, rectangular hexagonal shape or the like, and including all axially elongated shapes with a length over mean width ratio up to 500:1 or more. In a preferred embodiment said cross-section is circular.

Another advantage of the methods and devices according to the present invention, is that, due to the presence of a high density array of anchoring points provided by the micro-structured scaffold, the many problems related to the shrinkage and the swelling of monolithic separation and reaction bodies (occurring both during their manufacturing and their use) can be alleviated.

The channels and the columns according to the invention can be used for performing separations or for participating in chemical reactions. The present columns show improved resolution, capacity and/or flow rate.

A method for performing a separation of components in a sample comprises contacting the sample with the channels or the columns realized according to the method of the invention. In one embodiment, the sample is passed through a chromatographic column containing said channels.

The method according to the invention provides a separation device comprising the chromatographic material. The invention also provides a reaction device comprising the reaction material.

In particular, the channels and the columns obtained according to the invention can be used in liquid phase chromatography, including but not limited to reversed-phase, normal-phase, adsorption, size-exclusion, affinity, and ion chromatography.

The invention and its advantages are readily understood from the foregoing description. It is apparent that various changes can be made in the method without departing from the scope of the invention as defined by the appended claims.

## Claims

1. A method for preparing a monolithic separation or reaction column, comprising
(a) first arranging a micro-structured scaffold into a channel, said scaffold having a regularly spaced lattice structure produced using a micro-structuring method and comprising scaffold skeleton elements substantially filling the whole channel interior in a substantially uniform way, wherein said micro-structured scaffold is obtained by first providing an array of regularly spaced micro-pillars on a first surface, followed by a bonding step with a second surface so that said second surface and said first surface form a flow channel wherein said micro-pillars substantially extend from said first surface to said second surface,
the method **characterized by** the further step of
(b) forming a monolithic stationary phase by applying monolith forming mixtures and methods, whereby said formed monolith is fixed to the micro-structured scaffold and fills the flow channel .

2. A method according to claim 1 wherein said second surface also contains an array of micro-pillars and wherein the combination of said micro-pillars with the micro-pillars on said first surface substantially fill the entire channel depth.

3. A method according to any of claims 1 to 2, wherein the scaffold structure is pre-coated with a chemical substance or materials layer suitable to improve the fixation of the monolith to the scaffold.

4. A method according to any of claims 1 to 3, wherein the mean thickness of the scaffold skeleton elements is smaller than 20 µm, preferably smaller than 5 µm and more preferably smaller than 1 µm, and wherein the mean distance between said scaffold skeleton elements is smaller than 100 µm, preferably smaller than 10 µm, and is some cases preferably smaller than 1 µm.

5. A method according to claim 2 , wherein the axial cross-section of said micro-pillars is of circular, ellipsoidal, hemi-circular, diamond-like, triangular, square, rectangular or hexagonal shape or of an axially elongated shape with a length over mean width ratio up to 500:1.

## Patentansprüche

1. Verfahren zum Herstellen einer monolithischen Trenn- oder Reaktionssäule, umfassend
(a) zunächst das Anordnen eines mikrostrukturierten Gerüsts in einen Kanal, wobei das Gerüst eine regelmäßig beabstandete Gitterstruktur aufweist, die unter Verwendung eines mikrostrukturierenden Verfahrens produziert wird und Gerüstskelettelemente umfasst, die im Wesentlichen den gesamten Innenraum des Kanals auf im Wesentlichen gleichmäßige Weise ausfüllen, wobei das mikrostrukturierte Gerüst erhalten wird, indem zunächst eine Matrize aus regelmäßig beabstandeten Mikrosäulen auf einer ersten Oberfläche bereitgestellt wird, gefolgt von einem Bindungsschritt mit einer zweiten Oberfläche, so dass die zweite Oberfläche und die erste Oberfläche einen Strömungskanal bilden, wobei sich die Mikrosäulen im Wesentlichen von der ersten Oberfläche zur zweiten Oberfläche erstrecken,
wobei das Verfahren ferner **gekennzeichnet ist durch** den Schritt des
(b) Bildens einer monolithischen stationären Phase **durch** Anwenden von Monolith bildenden Gemischen und Verfahren, wobei der gebildete Monolith an dem mikrostrukturierten Gerüst fixiert ist und den Strömungskanal ausfüllt.

2. Verfahren nach Anspruch 1, wobei die zweite Oberfläche außerdem eine Matrize aus Mikrosäulen enthält und wobei die Kombination der Mikrosäulen mit den Mikrosäulen auf der ersten Oberfläche im Wesentlichen die gesamt Kanaltiefe ausfüllt.

3. Verfahren nach einem der Ansprüche 1 bis 2, wobei die Gerüststruktur mit einer chemischen Substanz oder Materialschicht vorbeschichtet ist, die geeignet ist, die Fixierung des Monolithen an dem Gerüst zu verbessern.

4. Verfahren nach einem der Ansprüche 1 bis 3, wobei die mittlere Dicke der Gerüstskelettelemente kleiner als 20 µm, bevorzugt kleiner als 5 µm und stärker bevorzugt kleiner als 1 µm ist, und wobei der mittlere Abstand zwischen den Gerüstskelettelementen kleiner als 100 µm, bevorzugt kleiner als 10 µm und in einigen Fällen bevorzugt kleiner als 1 µm ist.

5. Verfahren nach Anspruch 2, wobei der axiale Querschnitt der Mikrosäulen von kreisförmiger, ellipsoider, halbkreisförmiger, diamantartiger, dreieckiger, viereckiger, rechteckiger oder sechseckiger Form oder von axial verlängerter Form mit einem Verhältnis von Länge zu mittlerer Breite von bis zu 500:1 ist.

## Revendications

1. Un procédé pour préparer une colonne monolithique de séparation ou de réaction comprenant :
(a) premièrement l'arrangement d'un réseau micro-structuré dans un canal, ledit réseau ayant une structure réticulaire régulièrement espacée produite en utilisant une méthode micro-structurante et comprenant des éléments squelette du réseau remplissant substantiellement l'entièreté de l'intérieur du canal d'une manière substantiellement uniforme, dans lequel ledit réseau microstructuré est obtenu par premièrement l'apport d'une matrice de micro-piliers régulièrement espacées sur une première surface, suivi par une étape de liaison avec une seconde surface, tel que ladite seconde surface et ladite première surface forment un canal d'écoulement dans lequel lesdits micro-piliers s'étendent substantiellement de la première surface jusqu'à la seconde surface,
le procédé est **caractérisé par** l'étape suivante de
(b) formation d'une phase stationnaire monolithique par application de mélanges et de méthodes formant des monolithes, par lesquelles ledit monolithe formé est fixé au réseau micro-structuré et remplit le canal d'écoulement.

2. Un procédé selon la revendication 1 dans lequel ladite seconde surface contient également une matrice de micro-piliers et dans lequel la combinaison desdits micro-piliers avec les micro-piliers sur ladite première surface remplit substantiellement l'entièreté de la profondeur du canal.

3. Un procédé selon l'une quelconque des revendications 1 à 2, dans lequel la structure réseau est pré-enduite avec une substance chimique ou une couche de matériaux capable d'améliorer la fixation du monolithe au réseau.

4. Un procédé selon l'une quelconque des revendications 1 à 3, dans lequel l'épaisseur moyenne des éléments squelette du réseau est inférieure à 20 µm, preférentiellement inférieure à 5 µm et plus préférentiellement inférieure à 1 µm, et dans lequel la distance moyenne entre lesdits éléments squelette du réseau est inférieure à 100 µm, préférentiellement inférieure à 10 µm, et est dans certain cas préférentiellement inférieure à 1 µm.

5. Un procédé selon la revendication 2, dans lequel la coupe transversale desdits micro-piliers est de forme circulaire, ellipsoïde, hemi-circulaire, semblable au diamant, triangulaire, carré, rectangulaire ou hexagonale ou de forme axialement allongée avec un ratio longueur sur largeur moyenne jusqu'à 500 :1.
